# EUROPEAN PATENT APPLICATION

(11) **EP 3 343 884 A1**
(43) Date of publication of application: **04.07.2018**
(21) Application number: 15902355.5
(22) Date of filing: 17.11.2015
(51) Int. Cl.: H04M 1/02

(54) **MOBILE TERMINAL**

(30) Priority: 24.08.2015 KR 20150118684
(71) Applicant: LG Electronics Inc., Yeongdeungpo-gu Seoul 07336 (KR)
(72) Inventor: LEE, Yongho, Seoul 06772 (KR); HA, Junghyen, Seoul 06772 (KR); KIM, Kiyoung, Seoul 06772 (KR)
(74) Representative: Schornack, Oliver
(86) International application number: PCT/KR2015/012334
(87) International publication number: WO 2017/034083

(57) **Abstract**

Disclosed is a case of a mobile terminal having a metal part, the mobile terminal being characterized by comprising: a case comprising a plurality of metal parts, which are spaced from each other, and a polymer part, which is positioned between the metal parts; an opening formed on the polymer part; and an electronic component, which is positioned inside the case so as to correspond to the opening, and which outputs light or sound through the opening. The opening, which is formed on the case, is arranged such that the same is visible to the least extent, thereby improving the design of the exterior of the case.

## Description

### [Technical Field]

The present invention relates to a terminal having a metal body.

### [Background Art]

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As such functions become more diversified, the mobile terminal can support more complicated functions such as capturing images or video, reproducing music or video files, playing games, receiving broadcast signals, and the like. By comprehensively and collectively implementing such functions, the mobile terminal may be embodied in the form of a multimedia player or device.

Because a mobile terminal transmits and receives data using various wireless communication systems in order to enable use of the mobile terminal as a multimedia player, antennas mounted in the mobile terminal have become more numerous and various. Since antennas transmit and receive a signal, a metal material having a length equivalent to a signal that is transmitted and received is used as an emission member. As a result, the antennas affect each other or the antennas affect other parts. Consequently, it is important to appropriately set the distance between the respective antennas in order to improve the performance of the antennas.

In recent years, mobile terminals having a metal body exposed outside such that the mobile terminal has a more neat external design have been developed. A portion of the exposed metal body may be used as an antenna. In order to improve the performance of the antenna, however, a single metal member is not used but a plurality of metal parts is used, the metal parts being connected to each other.

### [Disclosure]

### [Technical Problem]

It is an object of the present invention to provide a mobile terminal having a case including metal parts and a polymer part, wherein a part that is exposed outside the case is located at the polymer part.

### [Technical Solution]

In accordance with an aspect of the present invention, the above and other objects can be accomplished by the provision of a mobile terminal including a case including a plurality of metal parts that are spaced apart from each other and a polymer part located between the metal parts, an opening formed in the polymer part, and an electronic part located inside the case at a position corresponding to the opening for outputting light or sound through the opening.

The case may be configured such that the polymer part is integrated with the metal parts by double injection.

The electronic part may be an audio output module, and the opening may include a sound hole including a plurality of micro holes.

The polymer part may include a first polymer part located between the metal parts and
a second polymer part extending from the first polymer part so as to be located inside the metal parts, wherein the opening may further include an extended sound hole formed in the extension so as to be connected to the sound hole.

The mobile terminal may further include a resonance space defined in the case such that sound output from the audio output module resonates therein, wherein the resonance space may be connected to the sound hole.

The mobile terminal may further include a display unit located at the front surface of the case, a window glass for covering the front surface of the case, and a printed circuit board located at the rear surface of the display unit, wherein the resonance space may be located between the display unit and the window glass or between the display unit and the printed circuit board, and the sound hole may include a plurality of sound holes disposed so as to be spaced apart from each other.

The mobile terminal may further include a camera hole formed in the rear surface of the case and a camera mounted in the case so as to be disposed at a position corresponding to the camera hole, wherein the electronic part may be an optical device that outputs or receives light through the opening.

The mobile terminal may further include a transparent cover inserted into the opening.

The polymer part may include an auxiliary display unit including electronic ink.

The mobile terminal may further include a piezoelectric element located inside the polymer part and a controller for controlling other electronic parts in response to a signal generated by the piezoelectric element, wherein the polymer part may include an elastic member, whereby the polymer part may be deformed by external pressure in order to press the piezoelectric element.

The mobile terminal may further include a feeder connected to at least one of the metal parts for supplying electric power to the metal part and a controller located in the case for controlling the supply of electric power to the feeder and transmitting and receiving a signal having a first frequency.

The sum of lengths of the feeder and the metal part connected to the feeder may be 1/2n the wavelength of the first frequency.

In accordance with another aspect of the present invention, there is provided a mobile terminal including a case including a plurality of metal parts that are spaced apart from each other and a transparent polymer part located between the metal parts and an optical device mounted inside the case so as to be disposed at a position corresponding to the polymer part for outputting light through the polymer part.

The optical device may be at least one of a camera, a flash, or a laser autofocus device.

The polymer part may include a first transparent part located at a position corresponding to the camera,
a second transparent part located at a position corresponding to the flash or the laser autofocus device, and a shielding part located between the first transparent part and the second transparent part.

The mobile terminal may further include polarization particles configured such that the arrangement of the polarization particles is changed to adjust the transparency of the polymer part when electric power is supplied thereto and a controller for performing control such that electric power is supplied to the polarization particles when the optical device is activated.

### [Advantageous effects]

In at least one embodiment of the mobile terminal according to the present invention, it is possible to configure the case of the mobile terminal having the metal parts such that the openings formed in the case are disposed so as to be maximally invisible, thereby improving the external appearance of the mobile terminal.

The auxiliary display unit as well as the opening may be formed in the polymer part, which partitions the metal parts from each other, or the polymer part may be used as a user input unit, whereby it is possible to minimize the size of the structure that is exposed outside.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### [Description of Drawings]

FIG. 1a is a block diagram of a mobile terminal in accordance with the present disclosure;
FIGs. 1b and 1c are conceptual views of one example of the mobile terminal, viewed from different directions;
FIG. 2 is an exploded view showing one example of metal parts and a polymer part of a rear case of the mobile terminal according to the present invention;
FIG. 3 is a view showing one example of sound holes in the mobile terminal according to the present invention;
FIGs. 4 and 5 are views showing another example of the sound holes in the mobile terminal according to the present invention;
FIG. 6 is a view showing one example of a rear case, a flash, and a laser autofocus device of the mobile terminal according to the present invention;
FIG. 7 is an exploded perspective view showing another example of the metal parts and the polymer part of the rear case of the mobile terminal according to the present invention;
FIGs. 8 and 9 are sectional views showing another example of the polymer part of the mobile terminal according to the present invention;
FIG. 10 is a view showing a change in a further example of the polymer part of the mobile terminal according to the present invention;
FIG. 11 is a view illustrating polarization particles of the mobile terminal according to the present invention;
FIG. 12 is a view showing one example of an auxiliary display unit of the mobile terminal according to the present invention;
FIG. 13 is a sectional view showing another example of a piezoelectric sensor of the mobile terminal according to the present invention; and
FIG. 14 is a view illustrating an example in which the mobile terminal of FIG. 13 is actually used.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

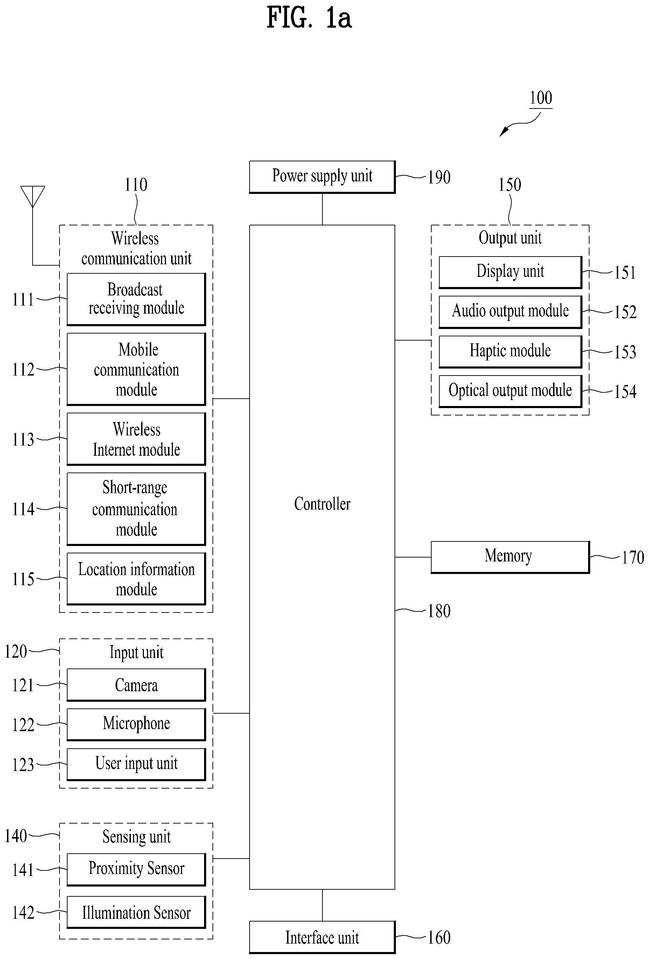

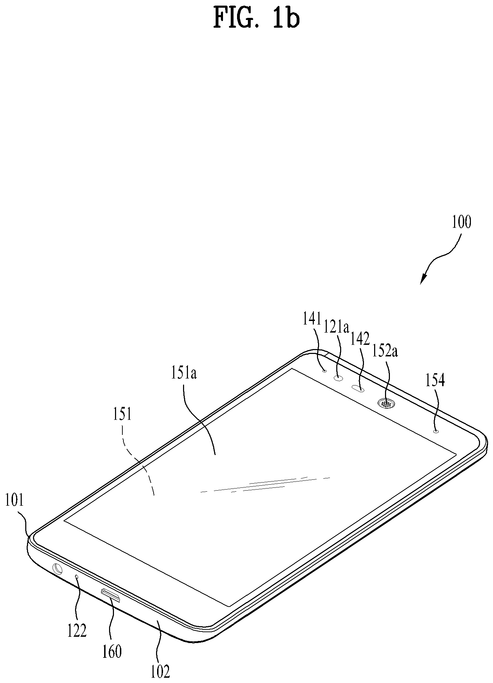

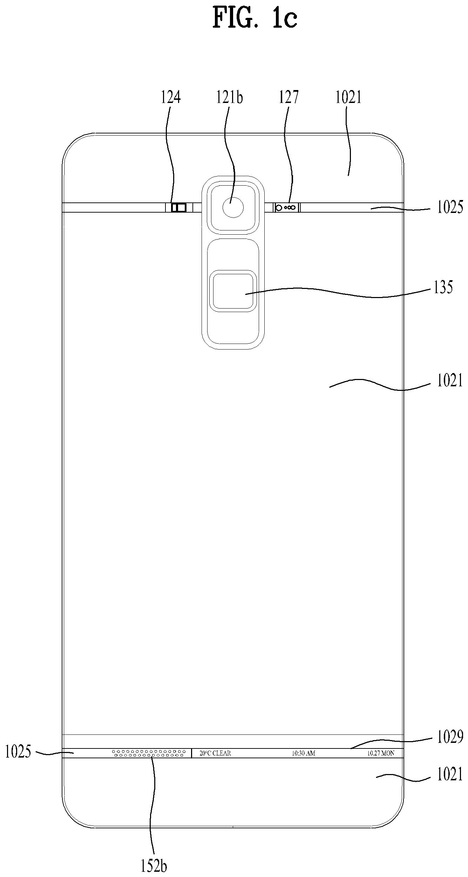

Reference is now made to FIGS. 1a-1c, where FIG. 1a is a block diagram of a mobile terminal in accordance with the present disclosure, and FIGS. 1b and 1c are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components in The Fig. 1a is not a requirement, and that greater or fewer components may alternatively be implemented.

More specifically, the wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example,, the sensing unit 140 may alternatively or additionally include other types of sensors or devices, such as a proximity sensor 141 and an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output, or activating application programs stored in the memory 170.

To drive the application programs stored in the memory 170, the controller 180 may be implemented to control a predetermined number of the components mentioned above in reference with FIG. 1a. Moreover, the controller 180 may be implemented to combinedly operate two or more of the components provided in the mobile terminal 100 to drive the application programs.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Some or more of the components may be operated cooperatively to embody an operation, control or a control method of the mobile terminal in accordance with embodiments of the present disclosure. Also, the operation, control or control method of the mobile terminal may be realized on the mobile terminal by driving of one or more application problems stored in the memory 170.

Referring now to FIGS. 1b and 1c, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

Here, the terminal body may be understood to refer to the concept of this bore a mobile terminal (100) to at least one of the aggregate.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

The cases 101 and 102 may be formed by injection-molding synthetic resin or may be formed of a metal, for example, stainless steel (STS), aluminum (Al), titanium (Ti), or the like. Only one material may be used, or two or more materials may be simultaneously used. The synthetic resin may be freely shaped by injection molding. In the case in which synthetic resin is used, the synthetic resin may be integrally coupled to another different kind of material in order to form a case. For example, synthetic resin and metal may be doubly injected such that one part 1021 is made of the metal and the other part is made of the synthetic resin 1025.

In the embodiment shown in FIG. 1c, the rear case 102 may include a metal parts 1021 made of metal and a polymer part 1025 made of synthetic resin. In addition to the rear case 102, the front case 101 may also be formed using different kinds of materials.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover, to hermetically seal an inner space when those cases are coupled.

The mobile terminal 100 may include the display unit 151, the first and second audio output module 152a and 152b, the proximity sensor 141, the illuminance sensor 142, the optical output module 154, the camera 121, the user input unit 123, the microphone 122 and the interface unit 160.

It will be described for the mobile terminal as shown in FIGS. 1b and 1c. The display unit 151, the first audio output module 152a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 151b and the second camera 121b are arranged in a rear surface of the terminal body.

It is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1a). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1b illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit 135 may be located on the rear surface of the terminal body. The rear input unit 135 can be manipulated by a user to provide input to the mobile terminal 100. The input may be used in a variety of different ways. For example, the rear input unit 135 may be used by the user to provide an input for power on/off, start, end, scroll, control volume level being output from the first or second audio output modules 152a or 152b, switch to a touch recognition mode of the display unit 151, and the like. The rear input unit 135 may be configured to permit touch input, a push input, or combinations thereof.

The rear input unit 135 may be located to overlap the display unit 151 of the front side in a thickness direction of the terminal body. As one example, the rear input unit 135 may be located on an upper end portion of the rear side of the terminal body such that a user can easily manipulate it using a forefinger when the user grabs the terminal body with one hand. Alternatively, the rear input unit 135 can be positioned at most any location of the rear side of the terminal body.

Embodiments that include the rear input unit 135 may implement some or all of the functionality of the first manipulation unit 123a in the rear input unit 135. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

A flash 124 and the laser autofocus 127 may be located adjacent to the second camera 121b. When an image of a subject is captured with the camera 121b, the flash 124 may illuminate the subject.

The Laser Auto Focus 127 measures the distance to the subject by shooting a laser beam on the subject, making the focus fast, increasing the focus accuracy, and adjusting the focus to the correct position in the dark.

The second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (see FIG. 1a) may be retractable into the terminal body. Alternatively, an antenna may be formed using a film attached to an inner surface of the rear cover 103, or a case that includes a conductive material.

A power supply unit 190 (see FIG. 1a) for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Each of the cases 101 and 102 may include metal parts 1021, which may be used as an emission part of an antenna. The emission part of the antenna may be connected to a feeder connected to the power supply unit, and may transmit and receive a signal having a predetermined frequency when current supplied from the feeder flows therein. The frequency is affected by the length of the emission part of the antenna (the sum of the lengths of the metal parts and the feeder). The length of the emission part may be 1/2 or 1/4 the wavelength of a frequency to be used.

Since the length of the emission part is set based on the frequency of a wireless communication signal to be used, the metal parts 1021 must be separated from each other so as to correspond to the wavelength of the frequency in order to use the metal parts 1021 of the case as the emission part. In the case in which first metal parts 1021a located at the upper and lower parts of the rear case are used as an antenna, as shown in FIG. 1c, polymer parts made of a non-conductive material may be interposed between a second metal part 1021b located at the middle of the rear case and the first metal parts 1021a.

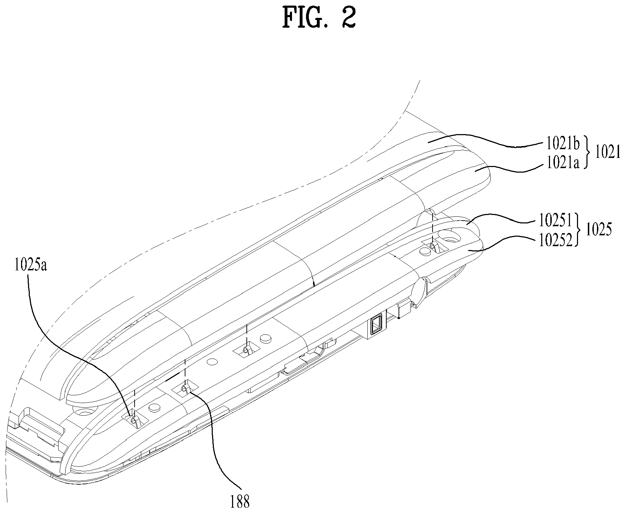

FIG. 2 is an exploded view showing one example of the metal parts 1021 and the polymer part 1025 of the rear case of the mobile terminal 100 according to the present invention. The first metal part 1021a is used as an antenna. The metal parts 1021 may be electrically connected to parts located in the case via a connection pin 188 for connection with the power supply unit and a ground unit in the mobile terminal 100.

A first polymer part 10251 located between the metal parts 1021 is exposed to the outside. Since the coupling force between different kinds of materials, such as metal and polymer, is small if only the first polymer part 10251 is used, a second polymer part 10252 for covering at least a portion of the inside of the metal parts 1021 may be further included in order to increase the coupling force therebetween and to improve the rigidity of the case, as shown in FIG. 2. The second polymer part 10252 also prevents the internal parts from being affected due to contact between the internal parts and the metal parts 1021.

That is, the polymer part 1025 may include a first polymer part 10251 located between the metal parts 1021 and a second polymer part 10252 extending from the first polymer part 10251 to cover at least a portion of the inside of the metal parts 1021.

For connection between the internal parts and the metal parts 1021, as shown in FIG. 2, holes 1025c are formed in portions of the second polymer part 10252, which is located on the inside, such that connection terminals 188 exposed through the holes 1025c are connected to the metal parts 1021.

The emission part of the antenna has a length equivalent to the wavelength of a given frequency. Since the metal parts 1021 are exposed outside, however, it is difficult to extend the length of the emission part of the antenna from the aspect of design. Instead, a separate conductive member may be used inside the rear case 102 in order to extend the length of the emission part of the antenna. The internal conductive member may be connected to the metal parts 1021 via the connection terminals 188 so as to serve as an emission member.

For an integrated rear design, the polymer part 1025 may have a color similar to that of the metal parts 1021, and the width of the polymer part 1025 may be as small as possible.

Openings 1026 may be formed in the rear case 102 such that a camera 121b, a rear input unit 135, a flash 124, a laser autofocus device 127, and a second audio output module 152b, which are located at the rear surface of the mobile terminal 100, are exposed from the rear surface. Since the openings 1026 may deteriorate quality in the external design of the mobile terminal 100, however, it is necessary to form the openings 1026 such that the opennings 1062 are as inconspicuous as possible. In particular, the metal parts 1021 occupy a large area of the rear case. If holes are formed in the metal parts 1021, therefore, the holes may be easily visible.

In order to prevent the openings 1026 formed in the case from being visible, the openings 1026, through which the camera 121b, the rear input unit 135, the flash 124, the laser autofocus device 127, and the second audio output module 152b are exposed, may be formed in the polymer part 1025, which is located between the metal parts 1021, instead of the metal parts 1021.

Referring to FIG. 1c, the openings 1026, through which the rear input unit 135, the flash 124, the laser autofocus device 127, and the second audio output module 152b are exposed, are formed in the polymer part 1025. Since the size of the rear input unit 135 or the camera 121b is large, however, holes may be formed in the metal parts 1021.

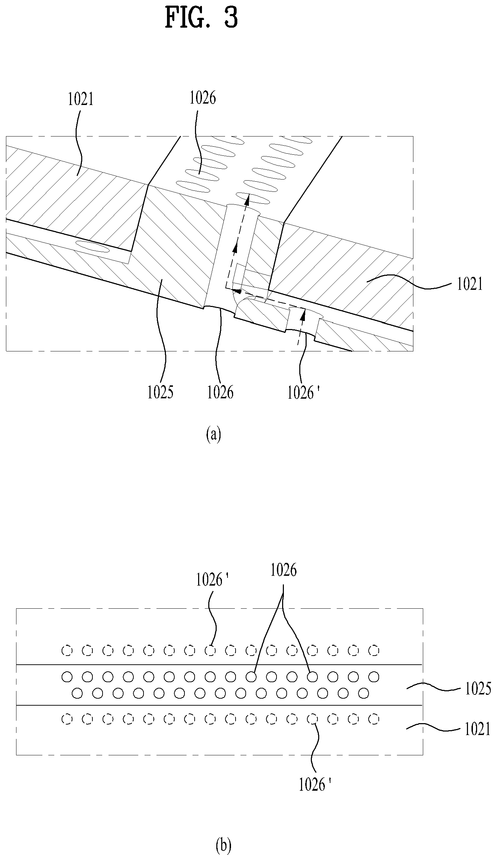

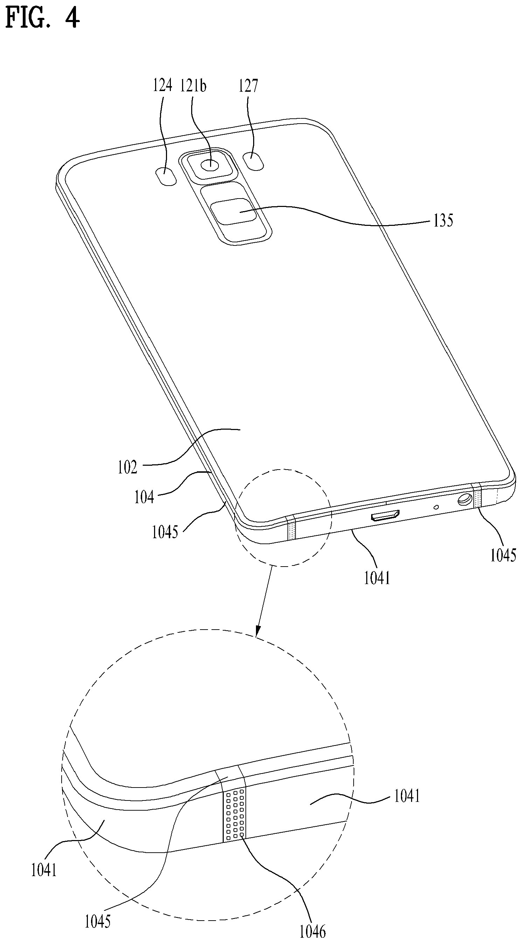

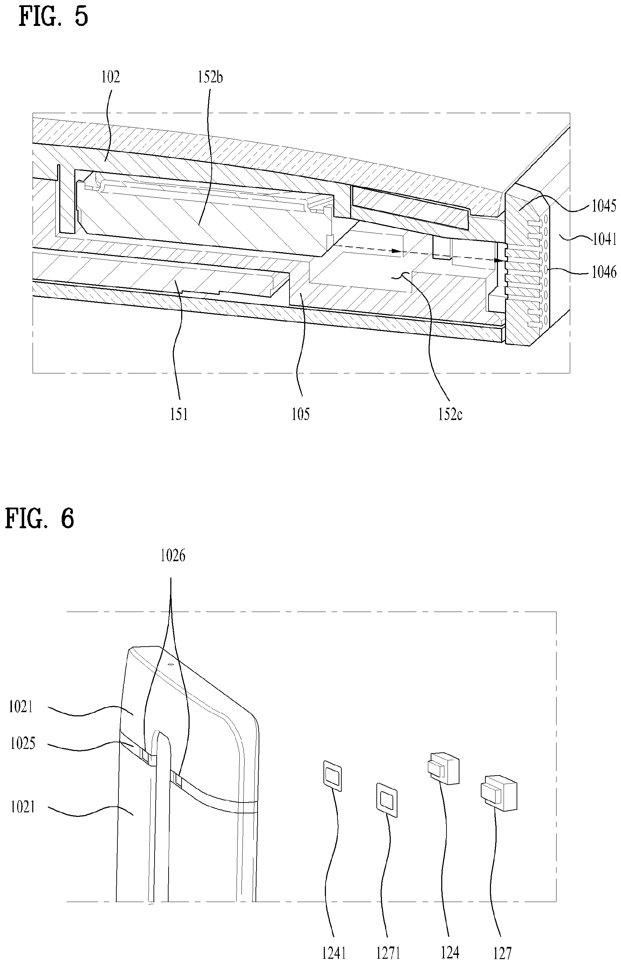

FIG. 3 is a view showing one example of the sound holes 1026 in the mobile terminal 100 according to the present invention, and FIGs. 4 and 5 are views showing another example of the sound holes 1026 in the mobile terminal 100 according to the present invention.

The mobile terminal 100 may further include a second audio output module 152b for outputting sound to a wide area, in addition to the first audio output module 152a, which is located adjacent to the ear of a user during telephone conversation. Sound from the second audio output module 152b is output through sound holes 1026 formed in the rear surface or the side surface of the mobile terminal 100. FIG. 3 shows sound holes 1026 formed in the rear surface of the mobile terminal, and FIG. 4 shows sound holes 1026 formed in the side surface of the mobile terminal.

As shown in FIG. 1c, the sound holes 1026 may be formed in the polymer part 1025. The sound holes 1026 formed through the polymer part 1025 serve as passages through which sound is output from the second audio output module 152b, which is located in the mobile terminal 100. The area of the sound holes 1026 affects the performance of the second audio output module 152b. Consequently, the area of the sound holes 1026 may be equal to or greater than a predetermined size.

If the polymer part 1025, which is exposed outside, is too large, however, the external design of the mobile terminal is deteriorated. For this reason, the area of the sound holes 1026, which are exposed outside, is limited. As shown in FIG. 3(a), therefore, extended sound holes 1026' may be further formed inside the second polymer part 10252, and the extended sound holes 1026' may be connected to the sound holes 1026 in order to supplement the insufficient area of the sound holes 1026. Referring to FIG. 3(b), the extended sound holes 1026' are hidden by the metal parts 1021, whereby the extended sound holes 1026' are not visible. (Dotted lines indicate that the extended sound holes are not visible from outside.)

As shown in FIG. 4, metal parts 1041 and a polymer part 1045 may be located at the side surface of the mobile terminal 100. The metal parts 1041 located at the side surface of the mobile terminal are divided so as to have a predetermined length such that the metal parts can be used as an antenna. To this end, the polymer part 1045 may be interposed between the metal parts 1041. Sound holes 1046 may be formed in the polymer part 1045, which is located at the side surface of the mobile terminal. Since the sound holes 1046 located at the side surface of the mobile terminal are less visible than the sound holes located at the rear surface of the mobile terminal, the area of the sound holes 1046 may be increased.

Referring to FIG. 5, the sound holes 1046 located at the side surface of the mobile terminal may make it easier to provide a space between the second audio output module 152b and the sound holes 1046 than the sound holes 1046 located at the rear surface of the mobile terminal. The space between the sound holes 1046 and the second audio output module 152b is a resonance space 152c, in which sound output from the second audio output module 152b can be amplified. A space between the display unit 151 and a main board or a space between the display unit 151 and the window 151a may be used as the resonance space 152c.

In this case, the resonance space 152c occupies most of the front area of the mobile terminal 100. Consequently, the sound holes 1046 may also be formed at positions spaced apart from the second audio output module 152b. Alternatively, the sound holes 1046 may be formed in a plurality of polymer parts 1025 in a distributed manner to improve the efficiency of the second audio output module 152b and to achieve a surround-sound effect (for example, the sound holes may be located at four positions, such as the left and right sides of the upper part and the left and right sides of the lower part).

FIG. 6 is a view showing one example of the rear case, the flash 124, and the laser autofocus device 127 of the mobile terminal 100 according to the present invention. Since the flash 124 and the laser autofocus device 127 are used with the camera 121b, the flash 124 and the laser autofocus device 127 may be disposed so as to be adjacent to the openings 1026 in the metal parts 1021, at which the camera 121b is located.

Consequently, the openings 1026 may be formed in the portion of the polymer part 1025 that is adjacent to the openings 1026 in the metal parts 1021 at which the camera 121b is located such that light is output through the openings 1026. In order to protect the flash 124 and the laser autofocus device 127, transparent covers 1241 and 1271, which are fitted into the openings 1026, may be further included.

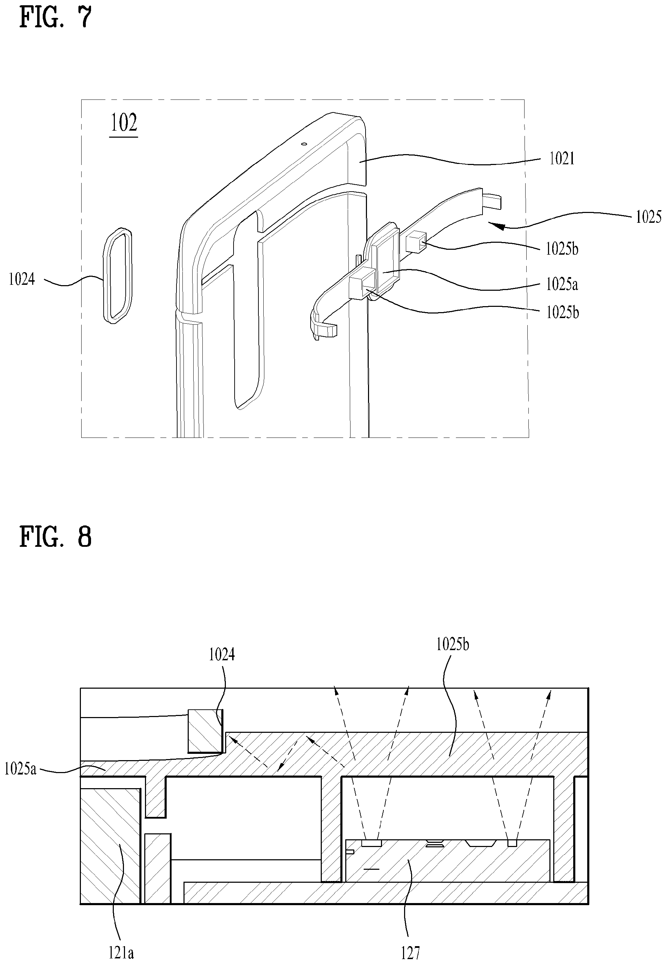

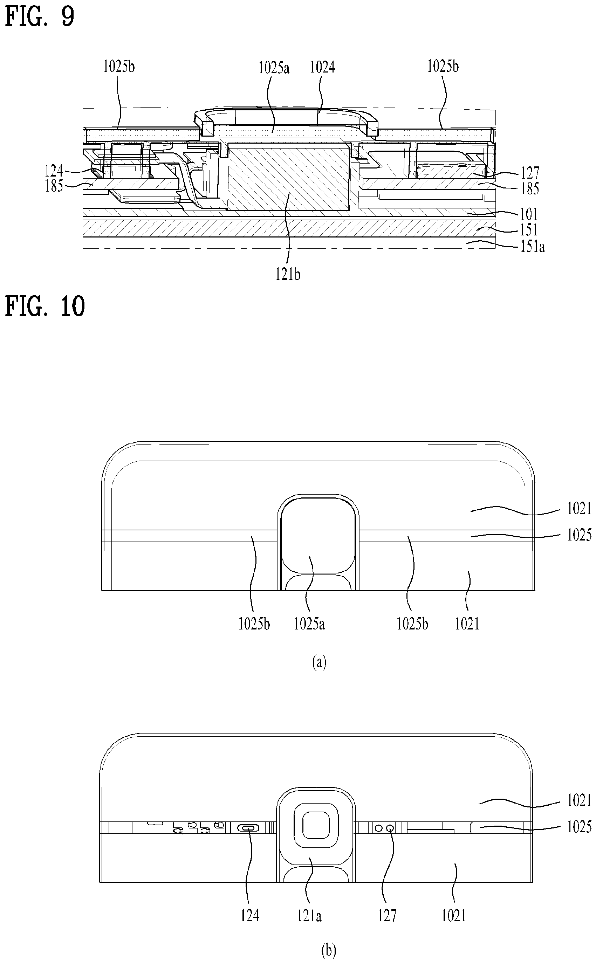

Even when the openings 1026 are formed in the polymer part 1025, the openings 1026 located at the rear surface of the mobile terminal may be readily visible. For this reason, the entirety of the polymer part may be made of a transparent material. FIG. 7 is an exploded perspective view showing another example of the metal parts 1021 and the polymer part 1025 of the rear case 102 of the mobile terminal 100 according to the present invention, and FIGs. 8 and 9 are sectional views of FIG. 7.

This embodiment is characterized in that a transparent polymer part 1025 is used instead of the openings 1026 formed in the polymer part 1025. The transparent polymer part 1025 covers the front surface of the camera 121b as well as the laser autofocus device 127 and the flash 124 so as to serve as a transparent cover located at the front surface of the camera 121b, the laser autofocus device 127, and the flash 124.

As shown in FIG. 7, fixing parts for fixing respective parts may protrude from the inner surface of the transparent polymer part 1025. The fixing parts guide the camera 121b, the laser autofocus device 127, and the flash 124 so as to be mounted at correct positions.

The transparent polymer part 1025 may include a first transparent part 1025a, at which the camera 121b is located, and a second transparent part 1025b, at which the flash 124 and the laser autofocus device 127 are located. Light output from the flash 124 and the laser autofocus device 127 passes through the second transparent part 1025b, and light is introduced into the camera through the first transparent part 1025a.

In order to prevent light output from the flash 124 and the laser autofocus device 127 from being introduced into the camera 121b, a shielding part 1024 may be further provided between the first transparent part 1025a and the second transparent part 1025b. As shown in FIG. 8, light output from the laser autofocus device 127 moves along the transparent polymer part 1025 but is prevented from being introduced into the camera 121b due to the shielding part 1024. The shielding part 1024 may be made of an opaque material, and may have a dark color.

FIG. 10 is a view showing a change in a further example of the polymer part 1025 of the mobile terminal 100 according to the present invention. When a transparent polymer part 1025 is used, as shown in FIG. 10(a), the internal parts are visible. In order to prevent the internal parts from being visible, the polymer part 1025 may include polarization particles 10.

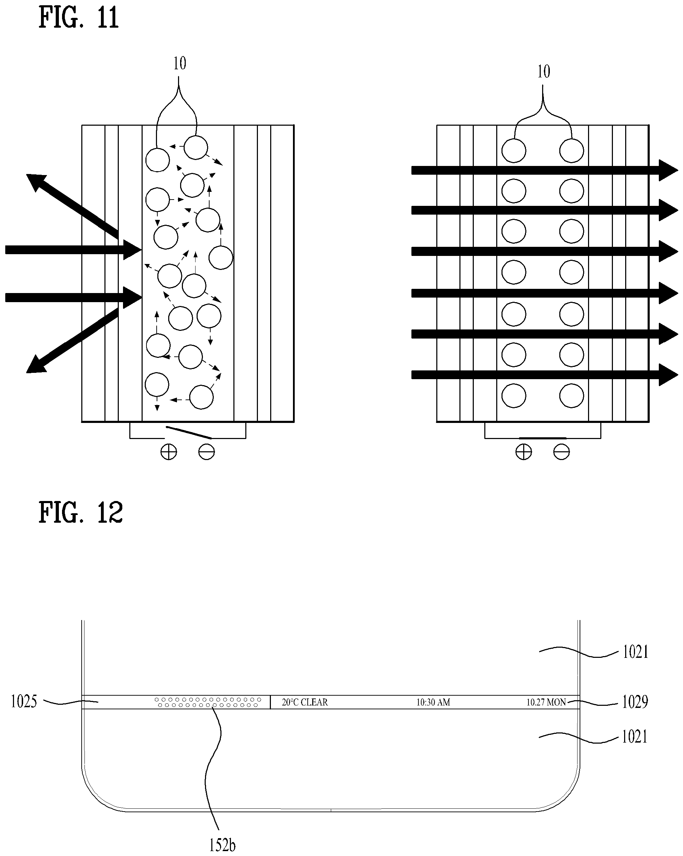

The polarization particles 10 are characterized in that the arrangement of the polarization particles is changed when current flows. When no current flows, as shown in FIG. 11(a), the arrangement of the polarization particles is irregular. Consequently, the light is prevented from passing through the polymer part, whereby the polymer part becomes opaque. When current is supplied to the polarization particles 10, the arrangement of the polarization particles is changed, whereby light passes through the polymer part.

When an application using the camera 121b is activated, current may be supplied to the polymer part 1025 such that the polymer part is switched to the transparent state shown in FIG. 10(a). That is, the flash 124 or the laser autofocus device 127 is used only when the camera 121b is used. Consequently, the temporary visibility of the internal parts does not matter. At normal times, the polymer part is opaque, whereby the internal parts are prevented from being visible.

In addition, it is not necessary to form the openings 1026 in the polymer part, and the transparent covers 1241 and 1271 (see FIG. 7) for covering the camera 121b, the flash 124, and the laser autofocus device 127 may be omitted, whereby the number of parts may be reduced.

FIG. 12 is a view showing one example of an auxiliary display unit 1029 of the mobile terminal 100 according to the present invention. Referring to FIG. 12, the auxiliary display unit 1029 may be formed in the polymer part 1025 using an OLED or electronic ink in order to provide simple information, such as the time, the remaining charge of the battery, announcements, the weather, and the date, using the auxiliary display unit 1029.

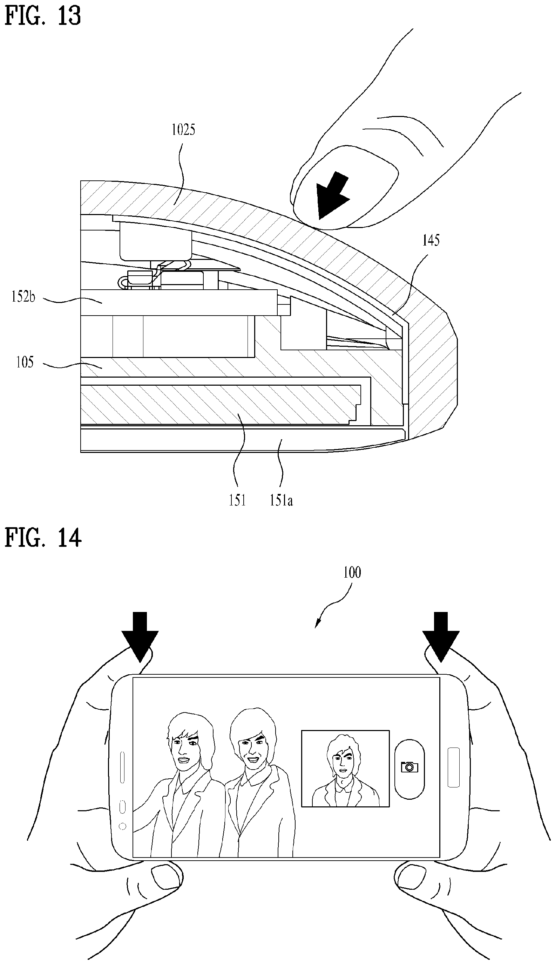

FIG. 13 is a sectional view showing another example of a piezoelectric sensor 145 of the mobile terminal 100 according to the present invention. In the case in which the polymer part 1025 includes an elastic material, the polymer part is deformed inward when a user pushes the polymer part 1025, and the polymer part is restored to the original shape thereof when the force is removed.

When the piezoelectric sensor 145 is disposed inside the polymer part 1025 or is integrated with the polymer part 1025, pushing of the polymer part 1025 by the user may be interpreted as user input. As shown in FIG. 14, photographs may be taken or games may be played using the piezoelectric sensor 145 of the polymer part 1025. In addition, an additional user input unit may be omitted, whereby the rear input unit 135 may be omitted.

When the polymer part 1025 is used as a user input unit, it is possible to reduce the number of additional user input units, whereby it is possible to provide a mobile terminal 100 having a more neat design in terms of unity in the external appearance of the mobile terminal 100.

As is apparent from the above description, in at least one embodiment of the mobile terminal 100 according to the present invention, it is possible to configure the case of the mobile terminal 100 having the metal parts 1021 such that the openings 1026 formed in the case are disposed so as to be maximally invisible.

The auxiliary display unit 1029 as well as the openings 1026 may be formed in the polymer part 1025, which partitions the metal parts 1021 from each other, or the polymer part 1025 may be used as a user input unit, whereby it is possible to minimize the size of the structure that is exposed outside.

The above detailed description is not to be construed as limiting the present invention in any aspect, and is to be considered by way of example. The scope of the present invention should be determined by reasonable interpretation of the accompanying claims, and all equivalent modifications made without departing from the present invention should be included in the following claims.

## Claims

1. A mobile terminal comprising:
a case comprising a plurality of metal parts that are spaced apart from each other and a polymer part located between the metal parts;
an opening formed in the polymer part; and
an electronic part located inside the case at a position corresponding to the opening for outputting light or sound through the opening.

2. The mobile terminal according to claim 1, wherein the case is configured such that the polymer part is integrated with the metal parts by double injection.

3. The mobile terminal according to claim 1, wherein
the electronic part is an audio output module, and
the opening comprises a sound hole through which sound is output from the audio output module.

4. The mobile terminal according to claim 3, wherein
the polymer part comprises: a first polymer part located between the metal parts; and a second polymer part extending from the first polymer part so as to be located inside the metal parts, and wherein
the opening further comprises an extended sound hole formed in the extension so as to be connected to the sound hole.

5. The mobile terminal according to claim 3, further comprising:
a resonance space defined in the case such that sound output from the audio output module resonates therein, wherein
the resonance space is connected to the sound hole.

6. The mobile terminal according to claim 5, further comprising:
a display unit located at a front surface of the case;
a window glass for covering the front surface of the case; and
a printed circuit board located at a rear surface of the display unit, wherein
the resonance space is located between the display unit and the window glass or between the display unit and the printed circuit board, and
the sound hole comprises a plurality of sound holes disposed so as to be spaced apart from each other.

7. The mobile terminal according to claim 1, further comprising:
a camera hole formed in a rear surface of the case; and
a camera mounted in the case so as to be disposed at a position corresponding to the camera hole, wherein
the electronic part is an optical device that outputs or receives light through the opening.

8. The mobile terminal according to claim 7, further comprising a transparent cover inserted into the opening.

9. The mobile terminal according to claim 1, wherein the polymer part comprises an auxiliary display unit comprising electronic ink.

10. The mobile terminal according to claim 1, wherein
the polymer part comprises an elastic member, and
the mobile terminal further comprises:
a piezoelectric element located inside the polymer part; and
a controller for controlling other electronic parts in response to a signal generated by the piezoelectric element.

11. The mobile terminal according to claim 1, further comprising:
a feeder connected to at least one of the metal parts for supplying electric power to the metal part; and
a controller located in the case for controlling a supply of electric power to the feeder and transmitting and receiving a signal having a first frequency.

12. The mobile terminal according to claim 11, wherein a sum of lengths of the feeder and the metal part connected to the feeder is 1/2n a wavelength of the first frequency.

13. A mobile terminal comprising:
a case comprising a plurality of metal parts that are spaced apart from each other and a transparent polymer part located between the metal parts; and
an optical device mounted inside the case so as to be disposed at a position corresponding to the polymer part for outputting light through the polymer part.

14. The mobile terminal according to claim 13, wherein the optical device is at least one of a camera, a flash, or a laser autofocus device.

15. The mobile terminal according to claim 14, wherein the polymer part comprises:
a first transparent part located at a position corresponding to the camera;
a second transparent part located at a position corresponding to the flash or the laser autofocus device; and
a shielding part located between the first transparent part and the second transparent part.

16. The mobile terminal according to claim 14, further comprising:
polarization particles configured such that an arrangement of the polarization particles is changed to adjust a transparency of the polymer part when electric power is supplied thereto; and
a controller for performing control such that electric power is supplied to the polarization particles when the optical device is activated.
